# EUROPEAN PATENT APPLICATION

(11) **EP 3 457 730 A1**
(43) Date of publication of application: **20.03.2019**
(21) Application number: 16901467.7
(22) Date of filing: 05.09.2016
(51) Int. Cl.: H04W 12/06

(54) **CARRIER EPDG GATEWAY ACCESS SYSTEM AND METHOD FOR IMPLEMENTING MOBILE COMMUNICATIONS**

(30) Priority: 13.05.2016 CN 201610318962
(71) Applicant: Beijing Travelrely Software Technologies Co., Ltd., Beijing 100044 (CN)
(72) Inventor: ZHAO, Jianlei, Beijing 100044 (CN); ZHAO, Kai, Beijing 100044 (CN); LUO, Biqun, Beijing 100044 (CN)
(74) Representative: Rutz, Andrea
(86) International application number: PCT/CN2016/098025
(87) International publication number: WO 2017/193512

(57) **Abstract**

Disclosed in the present application are a carrier ePDG gateway access system and method for implementing mobile communications, comprising: a mobile terminal used for mounting a first SIM card, and a SIM card reading device used for mounting a second SIM card; the mobile terminal accessing the Internet by means of a data network accessed by the first SIM card, and establishing an IPsec secure channel with the ePDG gateway to exchange data between the two; obtaining information of the second SIM card by means of the SIM card reading device; exchanging data by means of a carrier core network; verifying the identity of the second SIM card during the process of key negotiation, and authenticating the second SIM card during the process of registration in an IMS domain. After the registration in the IMS domain is complete, the mobile terminal may use the information of the second SIM card to carry out the mobile communication services of IMS-network-based telephone calling and SMS messaging, allowing for such a means of communication to be applied on a broader scale.

## Description

The present application claims priority to Chinese Patent Application No. 201610318962.0, titled "CARRIER EPDG GATEWAY ACCESS SYSTEM AND METHOD FOR IMPLEMENTING MOBILE COMMUNICATIONS", filed on May 13, 2016 with the State Intellectual Property Office of People's Republic of China, which is incorporated herein by reference in its entirety.

### FIELD

The present disclosure relates to the technical field of mobile communications, and in particular to an operator ePDG access system and a method for implementing mobile communications.

### BACKGROUND

The Wi-Fi Calling is a function in which a mobile terminal implements a phone call service and a short message service through Wi-Fi access. In fact, the difference only lies in that, instead of using a traditional GSM, 3G, or LTE network, a voice and a short message from a telephone are transmitted by using an internet channel of Wi-Fi. The transmitted voice or short message still has to enter a network of the operator via an access point that is preset in a mobile terminal and is set up by the operator in the internet. Then these voice and short message are delivered to the called side or short message receiver via a traditional channel in the network of the operator. That is, the WiFi Calling function requires that the mobile terminal first registers in an operator's IMS system as a VoLTE user, and then is allowed to use this function. Hence the WiFi Calling is a kind of Wi-Fi-based voice access means controlled by the operator.

This communication method requires that a communication baseband processor of the mobile terminal supports the Wi-Fi Calling function. However, most of communication baseband processors of current mobile terminals do not support this Wi-Fi Calling function, thus greatly limiting the application of this communication method.

### SUMMARY

In view of this, an operator ePDG access system and a method for implementing mobile communications are provided according to the present disclosure, so that a mobile terminal can access an EPC network of the LTE via an ePDG, to complete IMS registration and implement mobile communications, without requiring a communication baseband processor of the mobile terminal to support the Wi-Fi Calling.

In order to achieve the above purpose, a proposed technical solution is as follows.

An operator ePDG access system includes a mobile terminal installed with a first SIM card and a SIM card reading apparatus installed with a second SIM card. The mobile terminal is configured to access the internet via a network accessed by the first SIM card, establish an IPSec channel with an ePDG, obtain information of the second SIM card from the SIM card reading apparatus, perform data exchange with an operator core network, to perform identity verification on the second SIM card through a secret key negotiation process and perform authentication on the second SIM card through a registration process in an IMS domain, and perform a mobile communication service based on an IMS network by using the information of the second SIM card.

The SIM card reading apparatus includes a Bluetooth portable device, where the mobile terminal is connected to the Bluetooth portable device via a Bluetooth service to obtain the information of the second SIM card.

The SIM card reading apparatus includes a SIM card hosting apparatus and a communication server, where the mobile terminal is connected to the SIM card hosting apparatus via the communication server to obtain the information of the second SIM card.

The mobile terminal is a mobile phone or a tablet computer.

A method for implementing mobile communications based on the operator ePDG access system includes the following steps. The internet is accessed through a network accessed by the first SIM card. An ePDG address is obtained through a local configuration or a DNS mechanism. The secret key negotiation process is performed to perform the identity verification on the second SIM card. The IPSec channel is established with the ePDG after the secret key negotiation process is completed. A destination IP address and a P-CSCF address in the IMS domain sent from the ePDG are received and the registration process in the IMS domain is completed based on the destination IP address and the P-CSCF address in the IMS domain, where the registration process includes the authentication on the second SIM card, and the mobile terminal performs the mobile communication service based on the IMS network by using the information of the second SIM card.

The network accessed by the first SIM card is a 3G network, a 4G network or a Wi-Fi network.

A method for implementing mobile communications, based on the operator ePDG access system and a communication server, includes the following steps. The communication server obtains an ePDG address through a local configuration or a DNS mechanism. The mobile terminal accesses the internet via the network accessed by the first SIM card. After connected the communication server performs the secret key negotiation process to perform the identity verification on the second SIM card through the mobile terminal. The communication server establishes the IPSec channel with the ePDG after the secret key negotiation process is completed. The communication server receives a destination IP address and a P-CSCF address in the IMS domain sent from the ePDG, and completes the registration process in the IMS domain based on the destination IP address and the P-CSCF address in the IMS domain, where the registration process includes the authentication on the second SIM card performed through the mobile terminal, so that the mobile terminal performs the mobile communication service based on the IMS network by using the information of the second SIM card.

The network accessed by the first SIM card is a 3G network, a 4G network or a Wi-Fi network.

A method for implementing mobile communications, based on the operator ePDG access system and a communication server installed with a third SIM card, includes the following steps. The communication server obtains an ePDG address through a local configuration or a DNS mechanism. The communication server performs the secret key negotiation process to perform the identity verification on the third SIM card. The communication server establishes an IPSec channel with the ePDG after the secret key negotiation process is completed. The communication server receives a destination IP address and a P-CSCF address in the IMS domain sent from the ePDG. The mobile terminal accesses the internet via the network accessed by the first SIM card and accesses the communication server. After receiving the accessing from the mobile terminal, the communication server completes a registration process in the IMS domain based on the destination IP address and the P-CSCF address in the IMS domain, where the registration process includes the authentication on the second SIM card performed through the mobile terminal. The mobile terminal performs the mobile communication service based on the IMS network by using the information of the second SIM card.

The network accessed by the first SIM card is a 3G network, a 4G network or a Wi-Fi network.

It follows from the above technical solution that, the operator ePDG access system and the method for implementing mobile communications provided according to the present disclosure include a mobile terminal installed with a first SIM card and a SIM card reading apparatus installed with a second SIM card. The mobile terminal accesses the internet via the data network accessed by the first SIM card and performs data exchange with an ePDG by establishing an IPSec channel with the ePDG, obtains information of the second SIM card from the SIM card reading apparatus, and performs data exchange with the operator core network to perform identity verification on the second SIM card through a secret key negotiation process and perform authentication on the second SIM card through a registration process in an IMS domain. After the registration process in the IMS domain is completed, the mobile terminal can perform mobile communication services of a phone call and a short message based on the IMS network by using the information of the second SIM card. In this way, any mobile phones can perform the mobile communication service by setting an App to cooperate with the SIM card reading apparatus in advance, which facilitates the wide application of this communication method.

### BRIEF DESCRIPTION OF THE DRAWINGS

In order to clearly understand technical solutions of the embodiments of the present disclosure or the conventional technology, the drawings required in the description of the technical solutions of the present disclosure or the conventional technology are briefly described below. Apparently, the drawings show only some embodiments of the present disclosure, and other drawings may be obtained by those skilled in the art based on the drawings provided herein without any creative work.
Figure 1 is a schematic diagram of an operator ePDG access system according to an embodiment of the present disclosure;
Figure 2 is a schematic diagram of an operator ePDG access system according to another embodiment of the present disclosure;
Figure 3 is a schematic network diagram showing mobile communications services implemented through an operator ePDG access system according to an embodiment of the present disclosure;
Figure 4 is a schematic network diagram showing mobile communications services implemented through an operator ePDG access system according to another embodiment of the present disclosure; and
Figure 5 is a schematic network diagram showing mobile communication services implemented through an operator ePDG access system according to another embodiment of the present disclosure.

### DETAILED DESCRIPTION

Hereinafter, the technical solutions according to the embodiments of the present disclosure will be described clearly and completely in conjunction with the drawings in the embodiment of the present disclosure. Apparently, the described embodiments are only a few rather than all of embodiments of the present disclosure. Any other embodiments obtained by those skilled in the art based on the embodiments of the present disclosure without any creative work fall within the scope of protection of the disclosure.

The technical terms of the present disclosure are explained as follows to help understanding of the present disclosure.

ePDG is short for evolved Packet Data Gateway.

IPSec is short for Internet Protocol Security, which is a tunneling encryption protocol that provides high quality, operational and cryptographic-based security guarantees for data transmitted on the internet.

IMS is short for IP Multimedia Subsystem.

DNS is short for Domain Name System, which is a distributed database in the internet for mapping domain names and IP addresses to each other, which makes it easier for users to access the Internet without the burden to remember a numerical IP address that is directly readable by a machine.

An AAA server (Authentication, Authorization, Accounting server) is a server program that can handle user access requests and provide authentication, authorization and accounting services.

P-GW is a border gateway between an EPS (Evolved Packet System) and a PDN (Packet Data Network), which is in charge of access to the PDN and data forward between the EPS and the PDN.

GTP is short for GPRS Tunneling Protocol, which is a set of IP-based communication protocols used for supporting general packet radio services (GPRS) in GSM and UMTS networks.

P-CSCF is short for Proxy-Call Session Control Function, which is in charge of verifying a request, forwarding the request to a specified target, and processing and forwarding a response.

An operator ePDG access system is provided in the present embodiment, which includes a mobile terminal equipped with a first SIM card and a SIM card reading apparatus equipped with a second SIM card. The mobile terminal accesses the internet via a network (of 3G, 4G or Wi-Fi) accessed by the first SIM card. The mobile terminal further establishes an IPSec channel with an ePDG to perform data exchange. The mobile terminal obtains information of the second SIM card from the SIM card reading apparatus. The mobile terminal performs the data exchange with an operator core network, to perform identity verification on the second SIM card through a secret key negotiation process and perform authentication on the second SIM card through a registration process in an IMS domain, so that the mobile terminal performs a mobile communication service based on the IMS network by using the information of the second SIM card.

After the registration process in the IMS domain is completed, the mobile terminal can perform the mobile communication services of phone calls and the short messages based on the IMS network by using the information of the second SIM card. Any mobile phones can perform the mobile communication service by setting an App to cooperate with the SIM card reading apparatus in advance, which facilitates a broader application of this communication method.

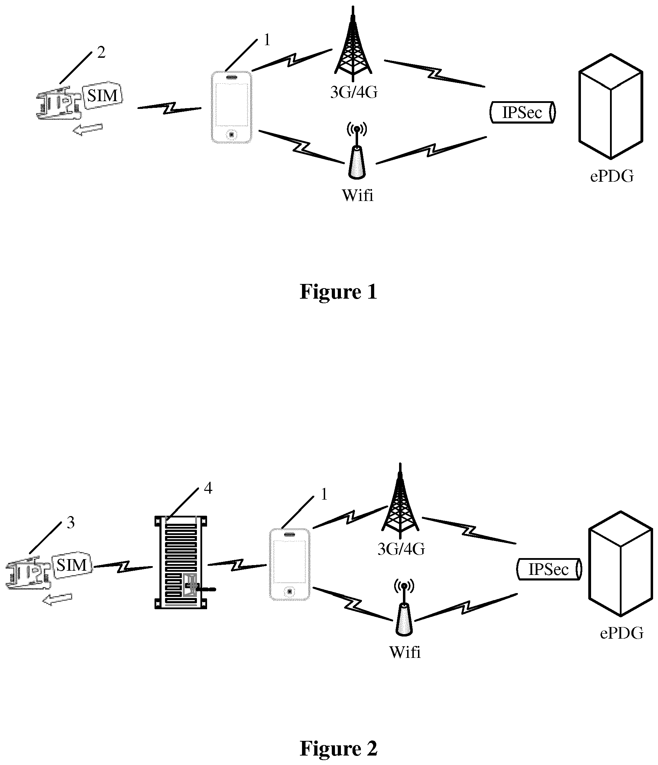

The SIM card reading apparatus may be a Bluetooth portable device 2. The Bluetooth portable device 2 is installed with a second SIM card, and configured to read the information of the second SIM card. As shown in Figure 1, a mobile terminal 1 is connected to the Bluetooth portable device 2 via an own Bluetooth service so as to obtain the information of the second SIM card through the Bluetooth portable device 2. The mobile terminal 1 can be a mobile phone, a tablet computer, or equivalent devices. That is, the preset App in the mobile terminal 1 accesses the Bluetooth portable device 2 through the Bluetooth service of the mobile terminal, and obtains the information of the second SIM card through the Bluetooth portable device 2. The mobile terminal accesses the internet via the network (of 3G, 4G or Wi-Fi) accessed by the first SIM card. The mobile terminal establishes the IPSec channel with the ePDG to achieve the data exchange with the ePDG.

The SIM card reading apparatus may include a SIM card hosting apparatus 3 and a communication server 4. As shown in Figure 2, the mobile terminal is connected to the SIM card hosting apparatus 3 via a communication server 4, and accesses the SIM card hosting apparatus 3 through the communication server 4, thereby obtaining the information of the second SIM card. That is, the preset App in the mobile terminal accesses the SIM card hosting apparatus 3 with assistance of the communication server, thereby accessing the second SIM card installed in the SIM card hosting apparatus to obtain the information of the second SIM card.

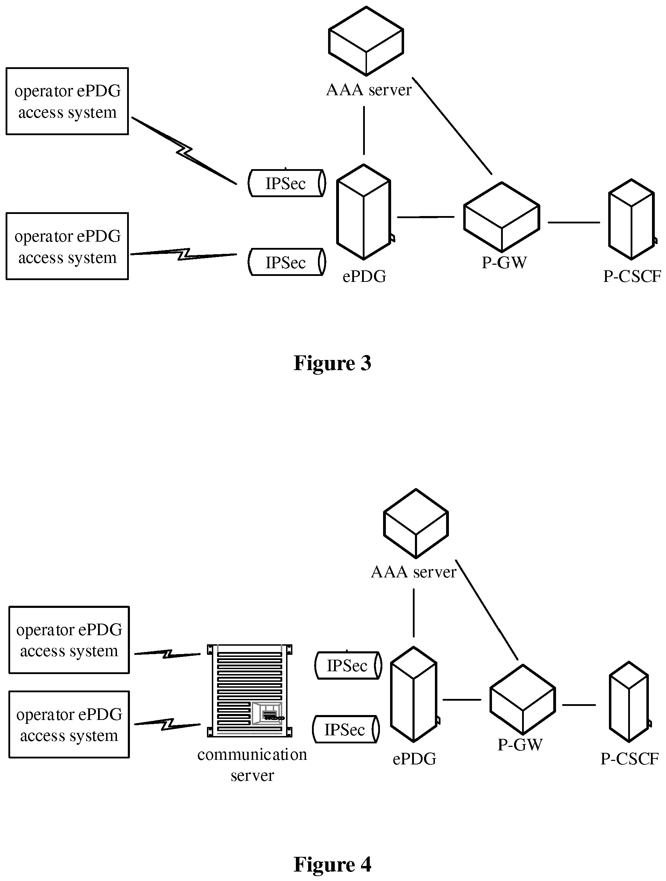

A method for implementing mobile communications is provided in the present embodiment, which is, as shown in Figure 3, based on the operator ePDG access system. The method includes the following steps S11 to S15.

In step S11, the mobile terminal 1 accesses the internet via the network connection (of 3G, 4G or Wi-Fi) accessed by the first SIM card.

In step S12, the mobile terminal 1 obtains an ePDG address through a local configuration or a DNS mechanism.

In step S13, the mobile terminal 1 performs a secret key negotiation process and performs identity verification on a second SIM card.

Specifically, an IKEv2 process is initiated, including an EAP-AKA authentication which is a procedure of identity verification on a user. In the EAP-AKA authentication, an AAA server performs authentication on the second SIM card and the ePDG obtains subscription data of the second SIM card from the AAA Server after successful authentication. The subscription data includes authorization information for the second SIM card to access the network through the ePDG. A GTP channel is established between the ePDG and a P-GW. The P-GW allocates a destination IP address and a P-CSCF address in an IMS domain, and sends them to the ePDG through a GTP message.

In step S14, the mobile terminal establishes an IPSec channel with the ePDG after the secret key negotiation process is completed.

In step S15, the mobile terminal 1 receives the destination IP address and the P-CSCF address in the IMS domain sent from the ePDG and completes a registration process in the IMS domain based on the destination IP address and the P-CSCF address in the IMS domain, where the registration process includes the authentication on the second SIM card.

After the IMS registration process is completed, the mobile terminal can use the information of the second SIM card to perform phone call and short message services based on the IMS network.

Another method for implementing mobile communications is provided in the present embodiment, which is, as shown in Figure 4, based on the operator ePDG access system and a communication server. The method includes the following steps S21 to S26.

In step S21, the communication server obtains an ePDG address through a local configuration or a DNS mechanism.

In step S22, the mobile terminal 1 accesses the internet via the network accessed by the first SIM card.

In step S23, the mobile terminal 1 accesses the communication server.

In step S24, after receiving the accessing from the mobile terminal 1, the communication server performs the secret key negotiation process and performs the identity verification on the second SIM card in the SIM card reading apparatus through the mobile terminal 1. This SIM card reading apparatus may be a Bluetooth portable device 2, or alternatively, a SIM card hosting apparatus 3 or a communication server 4. The communication server 4 and the communication server accessed by the mobile terminal 1 can be arranged as same physical server, but logically they are separated in network architecture.

The communication server initiates the IKEv2 process. The EAP-AKA authentication is performed on the second SIM card by the AAA Server. That is, the communication server accesses the mobile terminal 1 and the mobile terminal 1 accesses the SIM card reading apparatus to obtain the information of the second SIM card. The ePDG obtains subscription data of the second SIM card from the AAA Server after successful authentication. A GTP channel is established between the ePDG and a P-GW. The P-GW allocates a destination IP address and a P-CSCF address in the IMS domain, and sends them to the ePDG through a GTP message.

In step S25, the communication server establishes an IPSec channel with the ePDG after the secret key negotiation process is completed.

In step S26, the communication server receives the destination IP address and the P-CSCF address in the IMS domain sent from the ePDG, and the registration process in the IMS domain is completed based on the destination IP address and the P-CSCF address in the IMS domain, where the registration process includes the authentication on the second SIM card in the SIM card reading apparatus performed by the mobile terminal 1.

After the IMS registration is completed, the mobile terminal 1 performs the mobile communication service of phone calls and short messages based on the IMS network by using the information of the second SIM card with the assistance of the communication server.

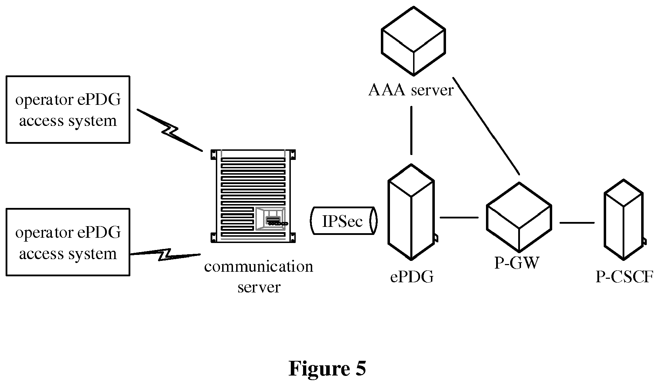

Another method for implementing mobile communications is provided in the present embodiment, which is, as shown in Figure 5, based on the operator ePDG access system and a communication server installed with a third SIM card (not shown). The method includes the following steps S31 to S37.

In step S31, the communication server obtains an ePDG address through a local configuration or a DNS mechanism.

In step S32, the communication server performs a secret key negotiation process to perform identity verification on the third SIM card.

The communication server initiates an IKEv2 process. The EAP-AKA authentication is performed on the third SIM card installed in the communication server by an AAA Server. That is, the communication server directly accesses the third SIM card. The ePDG obtains the subscription data of the third SIM card from the AAA Server after the successful authentication. A GTP channel is established between the ePDG and a P-GW. The P-GW allocates a destination IP address and a P-CSCF address in the IMS domain, and sends them to the ePDG through a GTP message.

In step S33, the communication server establishes an IPSec channel with the ePDG after the secret key negotiation process is completed.

In step S34, the communication server receives the destination IP address and the P-CSCF address in the IMS domain sent from the ePDG.

In step S35, the mobile terminal 1 accesses the internet via the network accessed by the first SIM card.

In step S36, the mobile terminal 1 accesses the communication server installed with the third SIM card.

In step S37, after receiving the accessing from the mobile terminal 1, the communication server completes a registration process in the IMS domain based on the destination IP address and the P-CSCF address in the IMS domain. The registration process includes the authentication on the second SIM card in the SIM card reading apparatus performed through the mobile terminal. The SIM card reading apparatus may be a Bluetooth portable device 2. Alternatively, the SIM card reading apparatus may include a SIM card hosting apparatus 3 and a communication server 4. The communication server 4 and the communication server that is accessed by the mobile terminal 1 and installed with the third SIM card may be arranged as same physical server, but logically they are separated in network architecture.

After the IMS registration process is completed, the mobile terminal 1 performs the mobile communication service of phone calls and short messages based on the IMS network by using information of the second SIM card with the assistance of the communication server. The communication server is installed with the third SIM card and establishes the IPSec channel with the ePDG. The mobile terminal registers and performs services through the unique IPSec channel in the IMS domain, which separates the process of accessing the ePDG to establish a transmission channel from a process of accessing the IMS domain to perform services.

The device embodiments described above are merely for illustration. The unit described as a separate component may be or may not be separate physically, and the component which is illustrated as a unit may be or may not be a physical unit, that is, it may be located at one position, or may be distributed over multiple network units. Some or all of the units may be selected as required to implement the solution of the embodiment. Those skilled in the art can understand and implement without paying creative work.

It should be further noted that the relationship terminologies such as "first", "second" and the like are only used herein to distinguish one entity or operation from another, rather than to necessitate or imply that the actual relationship or order exists across the entities or operations. Furthermore, terms of "include", "comprise" or any other variants are intended to be non-exclusive. Therefore, a process, method, article or device including a plurality of elements includes not only the elements but also other elements that are not enumerated, or also include the elements inherent to the process, method, article or device. Unless expressively limited otherwise, the statement "comprising (including) a..." does not exclude the case that other similar elements may exist in the process, method, article or device.

The embodiments in the specification are described in a progressive manner, with the emphasis of each of the embodiments on the difference from other embodiments. For the same or similar parts between the embodiments, reference may be made one to another.

The above description of the embodiments enables those skilled in the art to implement or use the present disclosure. Multiple modifications to these embodiments are apparent to those skilled in the art, and the general principle defined herein may be implemented in other embodiments without deviating from the spirit or scope of the present disclosure. Therefore, the present disclosure is not limited to these embodiments described herein, and conforms to the widest scope consistent with the principle and novel features disclosed herein.

## Claims

1. An operator ePDG access system, comprising:
a mobile terminal installed with a first SIM card; and
a SIM card reading apparatus installed with a second SIM card,
wherein the mobile terminal is configured to:
access the internet via a network accessed by the first SIM card,
establish an IPSec channel with an ePDG,
obtain information of the second SIM card from the SIM card reading apparatus,
perform data exchange with an operator core network, to perform identity verification on the second SIM card through a secret key negotiation process and perform authentication on the second SIM card through a registration process in an IMS domain, and
perform a mobile communication service based on an IMS network by using the information of the second SIM card.

2. The system according to claim 1, wherein
the SIM card reading apparatus comprises a Bluetooth portable device; and
the mobile terminal is connected to the Bluetooth portable device via a Bluetooth service to obtain the information of the second SIM card.

3. The system according to claim 1, wherein
the SIM card reading apparatus comprises a SIM card hosting apparatus and a communication server; and
the mobile terminal is connected to the SIM card hosting apparatus via the communication server to obtain the information of the second SIM card.

4. The system according to claim 1, wherein the mobile terminal is a mobile phone or a tablet computer.

5. A method for implementing mobile communications based on the operator ePDG access system according to claim 1, comprising:
accessing the internet through the network accessed by the first SIM card;
obtaining an ePDG address through a local configuration or a DNS mechanism;
performing the secret key negotiation process to perform the identity verification on the second SIM card;
establishing the IPSec channel with the ePDG after the secret key negotiation process is completed;
receiving a destination IP address and a P-CSCF address in the IMS domain sent from the ePDG and completing a registration process in the IMS domain based on the destination IP address and the P-CSCF address in the IMS domain, wherein the registration process comprises the authentication on the second SIM card; and
performing, by the mobile terminal, the mobile communication service based on the IMS network by using the information of the second SIM card.

6. The method according to claim 5, wherein the network accessed by the first SIM card is a 3G network, a 4G network or a Wi-Fi network.

7. A method for implementing mobile communications based on the operator ePDG access system according to claim 1 and a communication server, comprising:
obtaining, by the communication server, an ePDG address through a local configuration or a DNS mechanism;
accessing, by the mobile terminal, the internet through the network accessed by the first SIM card;
accessing, by the mobile terminal, the communication server;
performing, by the communication server, the secret key negotiation process to perform the identity verification on the second SIM card through the mobile terminal, after receiving the accessing from the mobile terminal;
establishing, by the communication server, an IPSec channel with the ePDG after the secret key negotiation process is completed;
receiving, by the communication server, a destination IP address and a P-CSCF address in the IMS domain sent from the ePDG, and completing the registration process in the IMS domain based on the destination IP address and the P-CSCF address in the IMS domain, wherein the registration process comprises the authentication on the second SIM card performed through the mobile terminal; and
performing, by the mobile terminal, the mobile communication service based on the IMS network by using the information of the second SIM card.

8. The method according to claim 7, wherein the network accessed by the first SIM card is a 3G network, a 4G network or a Wi-Fi network.

9. A method for implementing mobile communications based on the operator ePDG access system according to claim 1 and a communication server installed with a third SIM card, comprising:
obtaining, by the communication server, an ePDG address through a local configuration or a DNS mechanism;
performing, by the communication server, the secret key negotiation process to perform the identity verification on the third SIM card;
establishing, by the communication server, an IPSec channel with the ePDG after the secret key negotiation process is completed;
receiving, by the communication server, a destination IP address and a P-CSCF address in an IMS domain sent from the ePDG;
accessing, by the mobile terminal, the internet via the network accessed by the first SIM card;
accessing, by the mobile terminal, the communication server;
completing, by the communication server, a registration process in the IMS domain based on the destination IP address and the P-CSCF address in the IMS domain after receiving the accessing from the mobile terminal, wherein the registration process comprises the authentication on the second SIM card performed through the mobile terminal; and
performing, by the mobile terminal, the mobile communication service based on the IMS network by using the information of the second SIM card.

10. The method according to claim 9, wherein the network accessed by the first SIM card is a 3G network, a 4G network or a Wi-Fi network.
